# EUROPÄISCHE PATENTSCHRIFT

(11) **EP 3 680 130 B1**
(45) Veröffentlichungstag und Bekanntmachung des Hinweises auf die Patenterteilung: **14.04.2021**
(21) Anmeldenummer: 20150691.2
(22) Anmeldetag: 08.01.2020
(51) Int. Cl.: B60N 2/75

(54) **ARMLEHNE**
ARMREST
ACCOUDOIR

(30) Priorität: 11.01.2019 DE 102019000119
(43) Veröffentlichungstag der Anmeldung: 15.07.2020
(73) Patentinhaber: GRAMMER AG, 92289 Ursensollen (DE)
(72) Erfinder: Himmelhuber, Erwin, 92237 Sulzbach-Rosenberg (DE)
(74) Vertreter: Roche, von Westernhagen & Ehresmann

(56) Entgegenhaltungen:
- EP-B1- 1 311 177
- WO-A2-2010/147351
- DE-B4-102007 014 232
- DE-U1-202015 103 426

## Beschreibung

Die Erfindung betrifft eine Armlehne für einen Sitz, insbesondere für einen Fahrzeugsitz. Eine solche Armlehne umfasst ein Basisteil und eine schwenkbar an dem Basisteil gelagerte Armauflage. Die Armauflage ist relativ zu der Basis um die Schwenkachse zwischen einer Nichtgebrauchs- und einer Gebrauchsposition bewegbar.

Aus der EP 1 311 177 B1 ist eine Armlehne mit einer Führungsvorrichtung bekannt, welche zwei koaxiale Hülsen umfasst, wobei eine Hülse an der Sitzstruktur und eine zweite Hülse an der Armauflage gehalten ist. In der ersten Hülse ist eine Kulisse ausgebildet, in welche ein fest mit der zweiten Hülse verbundener Stift eingreift. Die Kulisse verläuft wendelförmig in Umfangsrichtung sowie in Längsrichtung der ersten Hülse. Auf diese Weise wird die Armauflage bei der Bewegung von der Nichtgebrauchs- in die Gebrauchsposition zusätzlich zu der Schwenkbewegung auch in Längsrichtung der Schwenkachse bewegt.

DE 20 2015 103 426 U1 beschreibt eine Armlehne mit einer Armauflage, die relativ zu einem Basisteil in Längsrichtung der Schwenkachse verlagerbar und um die Schwenkachse schwenkbar ist, um die Armauflage zwischen einer Nichtgebrauchs- und einer Gebrauchsposition zu bewegen und in der Nichtgebrauchsposition mit weniger Platzaufwand zu lagern.

Die Armlehne gemäß DE 10 2007 014 232 B4 ist relativ zu einer Basis in Längsrichtung einer Schwenkachse verlagerbar und zwischen einer etwa vertikalen und einer horizontalen Position um die Schwenkachse schwenkbar. Auf diese Weise kann die Armauflage in der Nichtgebrauchsposition in einer Aussparung des Sitzes verstaut werden und nimmt seitlich des Sitzes keinen Raum ein.

Die Armlehne gemäß FR 2 885 329 umfasst eine Basis, eine Armauflage sowie ein Zwischenelement. Das Zwischenelement bildet mit der Basis ein erstes Schwenkgelenk mit einer vertikalen Schwenkachse. Die Armauflage bildet mit dem Zwischenelement ein zweites Schwenkgelenk mit einer horizontalen Schwenkachse. Bei der Bewegung von einer Stauposition in eine Gebrauchsposition wird die Armauflage um die vertikale Schwenkachse und anschließend zusätzlich um die horizontale Schwenkachse geschwenkt Die Offenbarung WO2010/147351A2 offenbart eine Armlehne mit einer Basis und einer mittels einer Führungsvorrichtung zwischen wenigstens einer Gebrauchsposition und einer Nichtgebrauchsposition bewegbaren Armauflage, wobei die Armauflage mittels der Führungsvorrichtung parallel zu einer Schwenkachse zwischen einer proximalen und einer distalen Position bewegbar und um die Schwenkachse zwischen einer primären Position und einer sekundären Position schwenkbar ist.

Es war Aufgabe der Erfindung eine Armlehne zu schaffen, die in Längsrichtung der Schwenkachse bewegbar und um die Schwenkachse schwenkbar ist, wobei die Bewegung zwischen einer Stauposition und der Gebrauchsposition sowie die Rückbewegung leichter durchgeführt werden können.

Die Aufgabe wurde gelöst durch eine Armlehne mit den Merkmalen des Anspruchs 1.

Die erfindungsgemäße Armlehne umfasst eine Basis und eine mittels einer Führungsvorrichtung zwischen wenigstens einer Gebrauchsposition und einer Nichtgebrauchsposition bewegbare Armauflage. Die Basis ist z.B. von einer Fahrzeugstruktur oder der Struktur eines Sitzes gebildet. Die Basis kann z.B. auch von einem Teil gebildet sein, welches fest mit einem Sitz verbunden ist.

Die Führungsvorrichtung führt die Armauflage bei der Bewegung zwischen der Nichtgebrauchsposition und der wenigstens einen Gebrauchsposition. Bei der Bewegung zwischen der Nichtgebrauchsposition und der Gebrauchsposition führt die Armauflage sowohl eine Bewegung parallel zu der Längsrichtung der Schwenkachse, als auch eine Drehbewegung um die Schwenkachse aus. Die Armauflage ist z.B. mittels einer Axialführung zwischen einer relativ zu der Basis proximalen und einer distalen Position in eine erste Richtung bewegbar und mittels einer Rotationsführung zwischen einer primären und einer sekundären Position schwenkbar. Die Bewegung parallel zu der Längsrichtung der Schwenkachse und die rotatorische Bewegung um die Schwenkachse können nacheinander oder auch zugleich durchgeführt werden. Die Führung ist z.B. von einer Kulissenführung gebildet sein, in welcher ein Kulissenstein geführt ist.

Die Armlehne umfasst eine Antriebsvorrichtung mit einem Motorantrieb. Der Motorantrieb ist mit einem Antriebsteil versehen, welches in eine erste Richtung zwischen einer ersten und einer zweiten Position bewegbar ist, um die Armauflage wenigstens teilweise zwischen der Nichtgebrauchsposition und der Gebrauchsposition zu verlagern. Z.B. verlagert das Antriebsteil die Armauflage lediglich axial zwischen der proximalen und der distalen Position. Die Begriffe "erste Richtung" und "zweite Richtung" sind im Sinne der Erfindung nicht lediglich als bloße Raumrichtungen zu verstehen, sie können auch als Orientierung auf einer Bewegungsbahn verstanden werden, die z.B. in entgegengesetzte Richtungen durchlaufen wird.

Der Motorantrieb ist z.B. von einem Linearantrieb gebildet. Es kann sich aber alternativ auch um andere Antriebe handeln. Der Linearantrieb ist z.B. von einer Spindel gebildet, die mit einer Spindelmutter zusammenwirkt, wobei die Spindel oder die Spindelmutter von einem Motor angetrieben ist, um das Antriebsteil zwischen der ersten und der zweiten Position zu bewegen.

Die Antriebsvorrichtung umfasst z.B. eine Feder, die bei der Bewegung des Antriebsteils oder eines gesonderten zweiten Antriebsteils zwischen der ersten Position und der zweiten Position spannbar ist. Mit der Feder ist die Armauflage axial in eine zweite Richtung bewegbar, die der ersten Richtung entgegen gerichtet ist. Ist ein gesondertes Antriebsteil zu Spannen der Feder vorhanden, weist die Antriebsvorrichtung dafür z.B. einen gesonderten Motor zum Antrieb des Antriebsteils auf. Die Feder ist z.B. bei einer Bewegung des Antriebsteils von der ersten Position in die zweite Position spannbar. Alternativ ist die Feder bei der Bewegung des Antriebsteils von der zweiten Position in die erste Position spannbar.

Die Erfindung weist unter anderem den Vorteil auf, dass aufgrund der teilweisen Bewegung der Armauflage mittels einer Feder die Gefahr des Einklemmens vermieden werden kann, ohne dass dafür aufwendige Sensoren oder Überlastsicherungen benötigt werden. Wenn z.B. die kritische Bewegung der Armauflage von der Gebrauchsposition in die Nichtgebrauchsposition - bei welcher die Gefahr des Einklemmens von Gliedmaßen eines Sitzinsassen zwischen der Armauflage und dem Sitz besteht - durch Federkraft erfolgt, werden Verletzungen vermieden.

Eine Ausführungsform ist dadurch gekennzeichnet, dass die Basis mit ersten Führungsmitteln versehen ist, die mit zweiten Führungsmitteln zusammenwirken, die der Armauflage zugeordnet sind. Die ersten Führungsmittel und die zweiten Führungsmittel bilden z.B. eine Axialführung und / oder eine Rotationsführung für die Armauflage. Mit den ersten und zweiten Führungsmitteln ist die Armauflage z.B. bei der Bewegung zwischen der proximalen und distalen Position und / oder bei der Bewegung zwischen der primären Position und der sekundären Position geführt.

Die ersten Führungsmittel und / oder die zweiten Führungsmittel sind z.B. von einem Rohr gebildet und die Führungsmittel sind teleskopisch zueinander bewegbar. Diese Ausführungsform ist raumsparend, da in der Nichtgebrauchsposition die ersten und die zweiten Führungsmittel geschachtelt und in der Gebrauchsposition lediglich mit geringer Überdeckung angeordnet sind. Wenn die ersten und die zweiten Führungsmittel von einem Rohr gebildet sind, ist außerdem im Innenraum des inneren Rohres Platz für weitere Komponenten der Armlehne vorhanden.

Eine Ausführungsform ist dadurch gekennzeichnet, dass bei einer Bewegung des Antriebsteils zwischen der ersten Position und der zweiten Position die zweiten Führungsmittel relativ zu den ersten Führungsmitteln zwischen der proximalen Position und der distalen Position verlagerbar sind. Die zweiten Führungsmittel sind z.B. linear zwischen der proximalen Position und der distalen Position verlagerbar. Die zweiten Führungsmittel werden also mit Hilfe des Motorantriebs von dem Antriebsteil aus der proximalen Position in die distale Position verlagert oder aus der distalen Position in die proximale Position verlagert. In der proximalen Position und / oder in der distalen Position können die zweiten Führungsmittel z.B. derart verriegelt werden, dass eine Rückbewegung lediglich in einer bestimmten Position der Armauflage möglich ist.

Armlehne nach einem der vorangehenden Ansprüche, dadurch gekennzeichnet, dass die zweiten Führungsmittel eine Anschlagfläche aufweisen, die mit einer Mitnehmerfläche des Antriebsteils derart zusammenwirkt, dass die zweiten Führungsmittel bei einer Bewegung des Antriebsteils in eine erste Richtung mitgenommen werden und bei einer Bewegung in eine zweite Richtung voneinander lösbar sind. Indem das Antriebsteil nur lose mit den zweiten Führungsmitteln verbunden ist, ist es möglich, dass die zweiten Führungsmittel nur bei einer der Bewegungen von der ersten Position in die zweite Position des Antriebsteils oder von der zweiten Position in die erste Position des Antriebsteils mitgenommen wird und bei der entgegengesetzten Bewegung die Möglichkeit hat, sich von den zweiten Führungsmitteln zu lösen.

Eine Ausführungsform ist dadurch gekennzeichnet, dass ein Zuganker fest mit dem Antriebsteil oder mit einem gesonderten Antriebsteil der Antriebsvorrichtung verbunden ist und dass sich ein erstes Federende einer Feder an dem Zuganker abstützt. Das Antriebsteil kann den Zuganker derart bewegen, dass die Feder gespannt wird und die zweiten Führungsmittel in die proximale Position oder in die distale Position belastet. Für die Bewegung des Zugankers kann das selbe Antriebsteil verwendet werden, das die zweiten Formschlussmittel bewegt oder auch ein gesondertes Antriebsteil der Antriebsvorrichtung, welches mit einem gesonderten Antrieb versehen ist. Um die zweiten Führungsmittel zu bewegen, stützt sich z.B. ein zweites Federende an einer Anlagefläche der zweiten Führungsmittel ab. Ein erstes Federende stützt sich z.B. an einer Anlagefläche des Zugankers ab.

Insbesondere sind z.B. bei einer Bewegung des Antriebsteils von der ersten Position in die zweite Position die zweiten Führungsmittel aus der proximalen Position in die distale Position bewegbar. Alternativ sind bei einer Bewegung des Antriebsteils von der zweiten Position in die erste Position die zweiten Führungsmittel aus der distalen Position in die proximale Position bewegbar.

Bei einer Rückbewegung des Antriebsteils von der zweiten Position in die erste Position ist die Feder von dem Zuganker spannbar. Alternativ wird der Zuganker von dem Antriebsteil bei der Rückbewegung von der ersten Position in die zweite Position derart bewegt, dass die Feder gespannt wird.

Zusätzlich kann die Armauflage etwa 20° vor erreichen der sekundären Position in Kontakt mit einer gesonderten Feder bewegt werden, welche in diesem Schwenkwinkel die Armauflage bremst, wobei die Feder gespannt wird.

Eine Ausführungsform ist dadurch gekennzeichnet, dass eine Dämpfungsvorrichtung zum Dämpfen der Schwenkbewegung der Armauflage von der Nichtgebrauchsposition in die Gebrauchsposition vorgesehen ist. Auf diese Weise wird die Armauflage gedämpft in die Gebrauchsposition geschwenkt.

Eine weitere Ausführungsform sieht vor, dass die Schwenkbewegung der Armauflage von einer Feder unterstützt ist. Z.B. kann die Bewegung der Armauflage von einer etwa vertikalen Position in eine etwa horizontale Position federbelastet sein. Alternativ kann auch die Bewegung der Armauflage von der horizontalen Position in die vertikale Position federbelastet sein.

Weitere Vorteile der Erfindung ergeben sich anhand eines in den schematischen Fig. dargestellten Ausführungsbeispiels. Es zeigen:
Fig. 1 einen perspektivische Darstellung der Rückenlehne eines Fahrzeugsitzes mit der erfindungsgemäßen Armlehne, wobei sich die Armlehne in einer Nichtgebrauchsposition befindet,
Fig. 2 die Darstellung der Rückenlehne in Anlehnung an Fig. 1, wobei die Armauflage in Längsrichtung der Schwenkachse von einer proximalen Position in eine distale Position bewegt ist,
Fig. 3 die Rückenlehne in Anlehnung an Fig. 2, wobei die Armlehne in eine Gebrauchsposition geschwenkt ist,
Fig. 4 eine Draufsicht auf die Rückenlehne gemäß Fig. 1,
Fig. 5 eine Draufsicht auf die Rückenlehne gemäß Fig. 2,
Fig. 6 eine Draufsicht auf die Rückenlehne gemäß Fig. 3,
Fig. 7 eine Schnittdarstellung gemäß Schnittlinie A-A in Fig. 4,
Fig. 8 eine Schnittdarstellung der Armlehne gemäß Schnittlinie B-B in Fig. 5,
Fig. 9 eine Schnittdarstellung gemäß der Schnittlinie C-C in Fig. 6,
Fig. 10 eine Schnittdarstellung gemäß Schnittlinie D - D in Fig. 4,
Fig. 11 eine Schnittdarstellung gemäß Schnittlinie E - E in Fig. 5,
Fig. 12 eine Schnittdarstellung gemäß Schnittlinie F - F in Fig. 6.

Die Armlehne insgesamt ist in Figuren mit dem Bezugszeichen 10 bezeichnet. Gleiche Bezugszeichen in den unterschiedlichen Figuren bezeichnen entsprechende Teile, auch wenn kleine Buchstaben nachgestellt oder weggelassen sind.

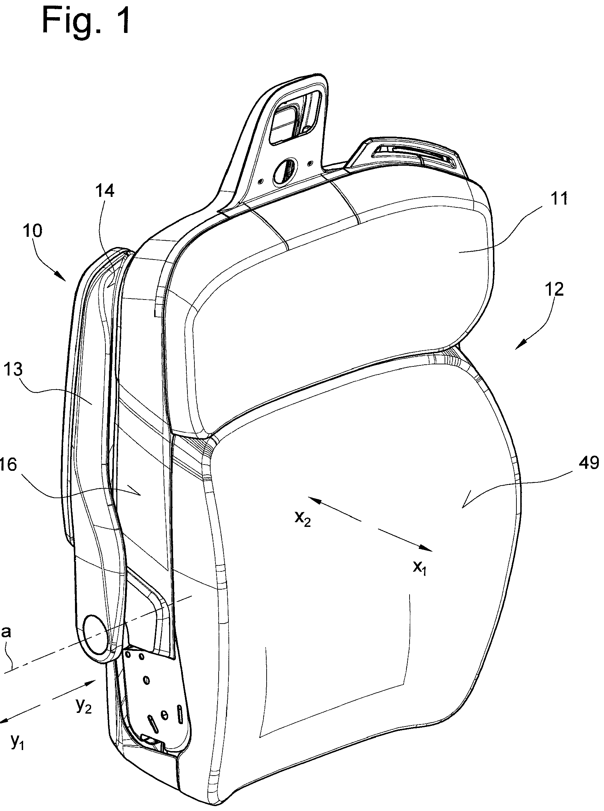

Gemäß Fig. 1 ist die Armlehne 10 an der Rückenlehne 11 eines Fahrzeugsitzes 12 befestigt. Eine Anlagefläche 49 der Rückenlehne 11 ist in Richtung x1 ausgerichtet. Die Richtung x1 entspricht z.B. der Geradeaus-Fahrrichtung des Fahrzeugs, während eine Rückfläche 15 der Rückenlehne in die entgegengesetzte Richtung x2 gerichtet ist.

Die Sitzfläche des Fahrzeugsitzes ist nicht dargestellt. Die Armlehne 10 befindet sich in einer Nichtgebrauchsposition, wobei eine Armauflage 13 mit einer Unterfläche 14 wenigstens teilweise einer Rückfläche 15 (in Fig. 1 nicht erkennbar) der Rückenlehne 11 gegenüberliegt. Die Armauflage ragt erfindungsgemäß in der Nichtgebrauchsposition lateral lediglich geringfügig oder gar nicht über eine Seitenfläche 16 der Rückenlehne 11 hinaus.

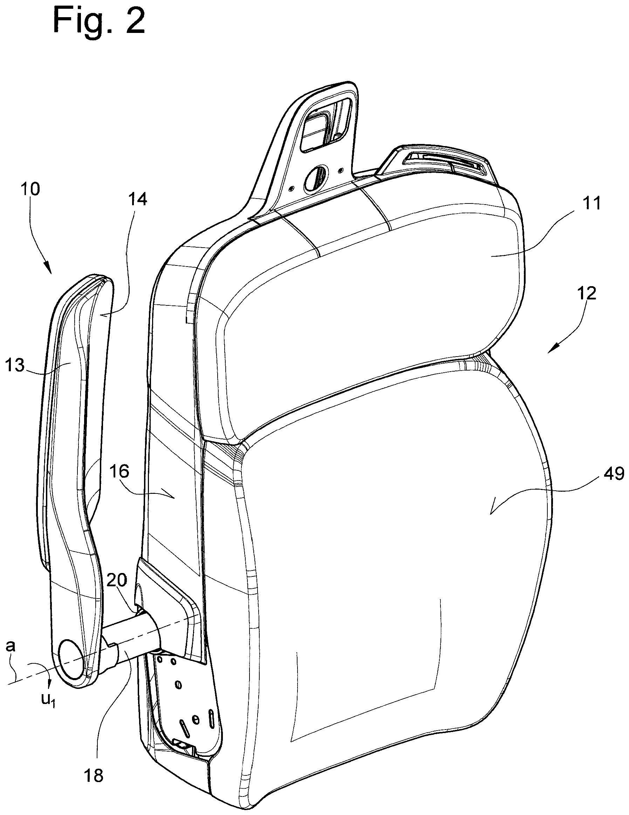

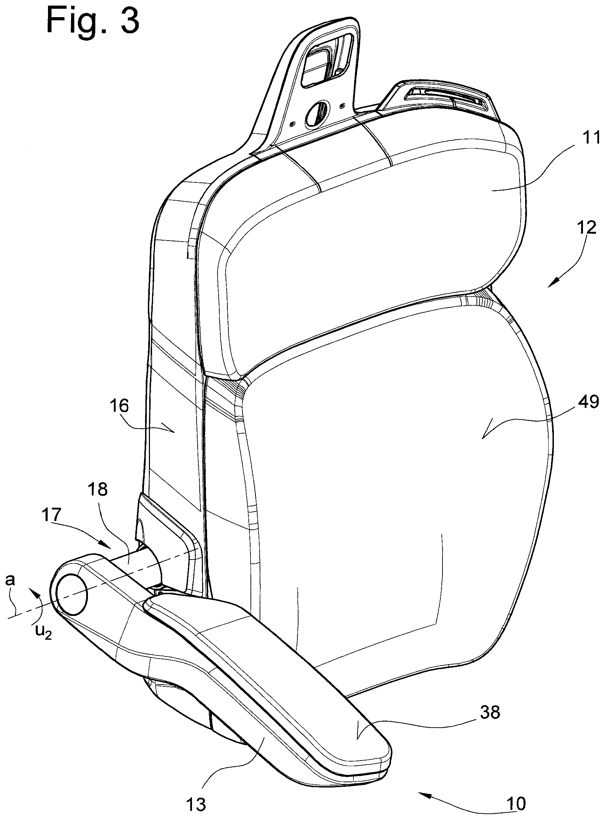

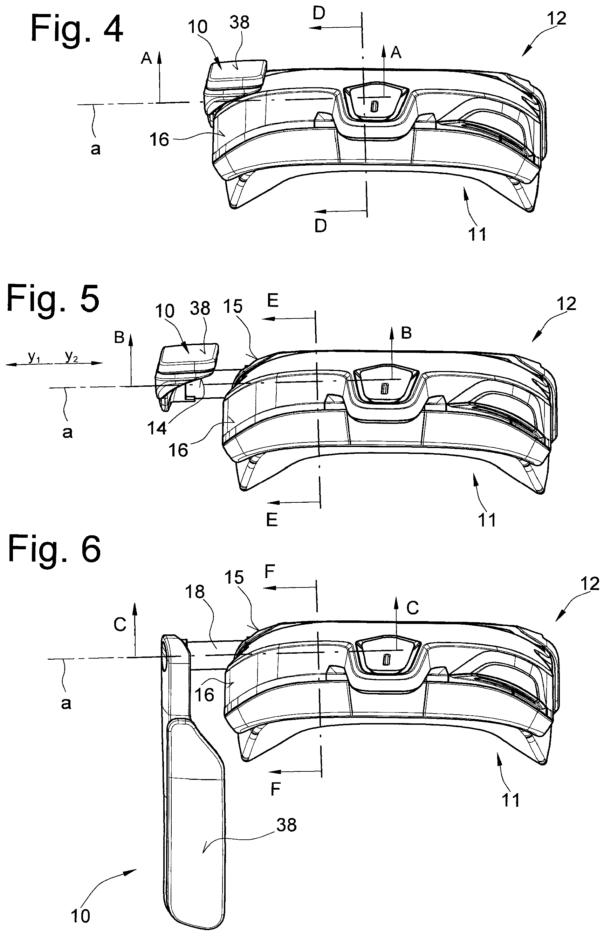

Die Armauflage 13 ist parallel zu der Längsrichtung einer Schwenkachse a in die Richtungen y₁ und y₂ bewegbar sowie um die Schwenkachse a in die Richtungen u₁ und u₂ schwenkbar (siehe die Fig. 2 und 3). Zur Bewegung der Armauflage 13 aus der in Fig. 1 dargestellten Nichtgebrauchsposition in eine Gebrauchsposition, wird die Armauflage 13 zunächst axial in Richtung y₁ aus einer proximalen Position gemäß den Fig. 1 und 4 in eine distale Position gemäß den Fig. 2 und 5 bewegt, bis die Unterfläche 14 sich vollständig seitlich der Seitenfläche 16 befindet (siehe Fig. 2). Anschließend wird die Armauflage 13 um die Schwenkachse a in Richtung u₁ in die Gebrauchsposition geschwenkt, die in den Fig. 3 und 6 dargestellt ist.

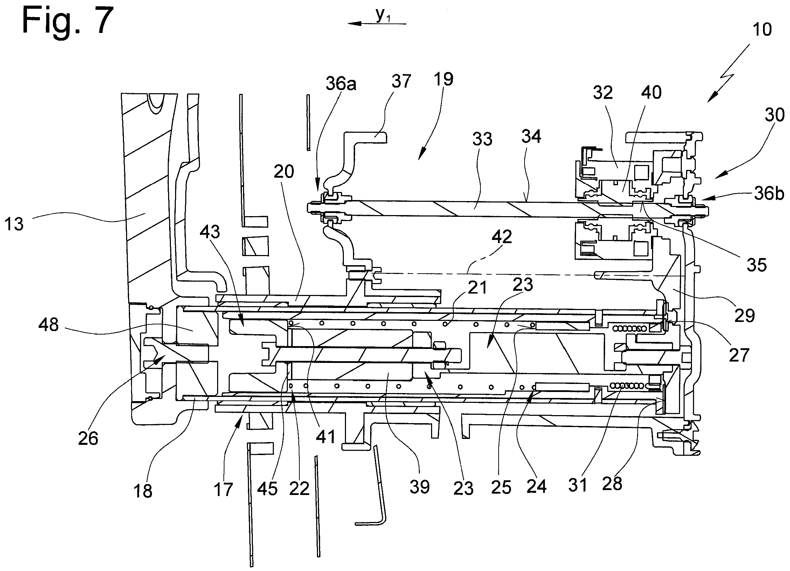

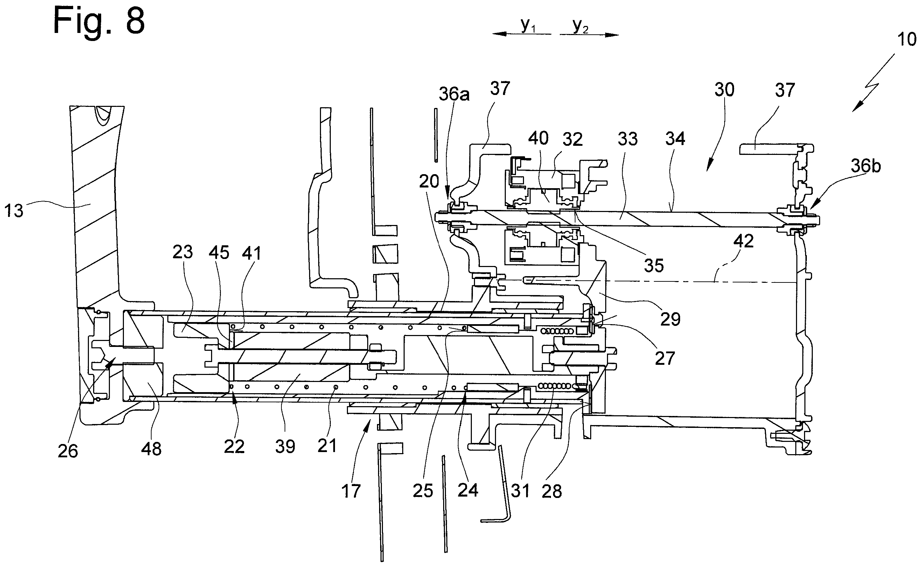

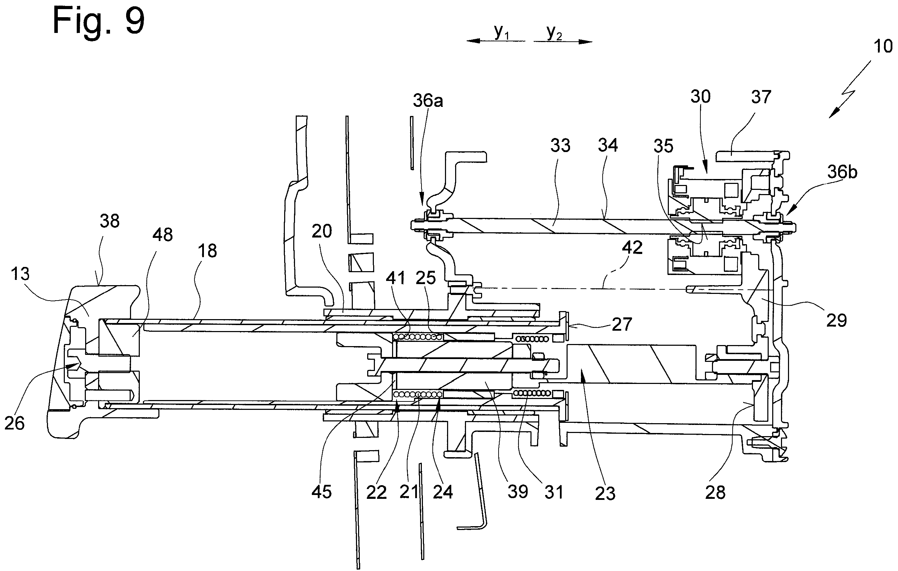

Die Armlehne 10 umfasst eine Führungsvorrichtung 17 (siehe Fig. 7), mittels welcher die Armauflage 13 in Längsrichtung der Schwenkachse a bei der Bewegung in Richtung y₁ und y₂ zwischen einer proximalen Position gemäß Fig. 7 und einer distalen Position gemäß Fig. 8 geführt ist und mit welcher die Armauflage 13 bei der Bewegung in die Schwenkrichtungen u1 und u2 zwischen einer primären Position gemäß Fig. 8 und einer sekundären Position gemäß Fig. 9 geführt ist.

Die Führungsvorrichtung 17 umfasst zweite Führungsmittel in Form einer Hülse 18, die mittels einer Befestigung 26 über ein Endstück der Hülse 18 fest mit der Armauflage 13 verbunden ist, sowie fest mit einer Basis 19 verbundene erste Führungsmittel in Form einer Hülse 20. Die Basis 19 umfasst in diesem Ausführungsbeispiel ein Gehäuse 37, welches fest mit der Struktur der Rückenlehne 11 verbunden ist. Die Hülsen 18 und 20 sind koaxial zu der Schwenkachse a angeordnet und teleskopisch bewegbar, d.h., dass die Hülse 18 relativ zu der Hülse 20 in Richtung y₁ und y₂ bewegbar ist.

In Fig. 7 ist eine Feder 21 einer Antriebsvorrichtung 30 erkennbar, die koaxial zu der Schwenkachse a angeordnet ist. Die Feder 21 stützt sich mit einem Federende 22 an einer Anlagefläche 41 eines Profilelements 43 eines Zugankers 23 ab, der ebenfalls Teil der Antriebsvorrichtung 30 ist. Der Zuganker 23 ist fest mit dem Antriebsteil 29 verbunden. Mit einem anderen Federende 24 stützt sich die Feder 21 an einer Anschlagfläche 25 ab, die fest mit der Hülse 18 verbunden ist. Die Hülse 18 weist eine Anschlagsfläche 27 auf, die gemäß Fig. 7 mit einer Mitnahmefläche 28 eines Antriebsteils 29 der Antriebsvorrichtung 30 zusammenwirkt.

Das Profilelement 43 ist - z.B. mittels eines Keilwellenprofils - mit der Hülse 18 drehverbunden. Auf diese Weise wird die Schwenkbewegung der Armauflage 13 in Richtung u1 von einem Dämpfer 39 gedämpft. Ein Mitnehmer 45 des Dämpfers ist mit dem Profilelement 43 drehverbunden.

In Fig. 7 ist ferner eine Feder 31 erkennbar, welche die Armauflage 13 in Schwenkrichtung u₁ belastet. Die Feder 31 ist als Drehfeder ausgebildet und stützt sich mit einem Federende an der Basis 19, z.B. an dem Gehäuse 37, und mit einem anderen Federende an der Hülse 18 ab.

Die Antriebsvorrichtung 30 ist als Linearantrieb ausgebildet und umfasst einen Motor 32 sowie eine Spindel 33. Die Spindel 33 ist mit einem Außengewinde 34 versehen, welches mit einem Innengewinde 35 einer von dem Motor 32 angetriebenen Spindelmutter 40 in Eingriff steht, die an dem Motor 32 gelagert ist. Der Motor 32 ist fest mit dem Antriebsteil 29 verbunden. Die Spindel 33 ist in Lagern 36a und 36b gelagert, die an dem Gehäuse 37 der Armlehne 10 gehalten sind. Eine lediglich durch eine Strichpunktlinie angedeutete Führungsstange 42 dient als Verdrehsicherung für das Antriebsteil 29.

Eine nicht dargestellte Steuerung ist z.B. mittels eines Schalters oder eines Sensors aktivierbar. Diese veranlasst den Motor 32, die Spindelmutter 40 in eine erste Drehrichtung zu bewegen, so dass das mit dem Motor 32 fest verbundene Antriebsteil 29 sich entlang der Spindel 33 in Richtung y₁ bewegt. Dabei nimmt das Antriebsteil 29 die Baugruppe aus Hülse 18, Zuganker 23 und Federn 21 und 31 mit und bewegt die Baugruppe relativ zu der Hülse 20 in Richtung y₁ aus der proximalen Position gemäß Fig. 7 in die distale Position gemäß Fig. 8.

Dabei ist die Hülse 18 von einer Axialführung der Führungsvorrichtung 17 geführt. Diese umfasst einen an der Hülse 18 ausgebildeten Vorsprung 44, welcher in eine sich in Richtung y1 erstreckende Führungsbahn 46 eingreift, die in dem Gehäuse 37 ausgebildet ist. Die Führungsbahn 46 ist derart ausgebildet, dass der Vorsprung 44 Freiheitsgrade in Richtung y1 und y2 hat und eine Drehbewegung der Hülse 18 in Richtung u1 und u2 verhindert wird.

In der distalen Position endet die Führungsbahn 46. Aufgrund der Belastung der Armauflage 13 von der Feder 31 in Richtung u1 wird der Vorsprung 44 in eine Führungskulisse 47 der Führungsvorrichtung 17 bewegt, die eine Rotationsführung bildet, welche eine Bewegung des Vorsprungs 44 in die Richtungen y₁ und y₂ verhindert, aber eine Bewegung in die Richtungen u1 und u2 erlaubt. Die Führungskulisse 47 verriegelt somit die Rückbewegung der Hülse 18 in Richtung y2.

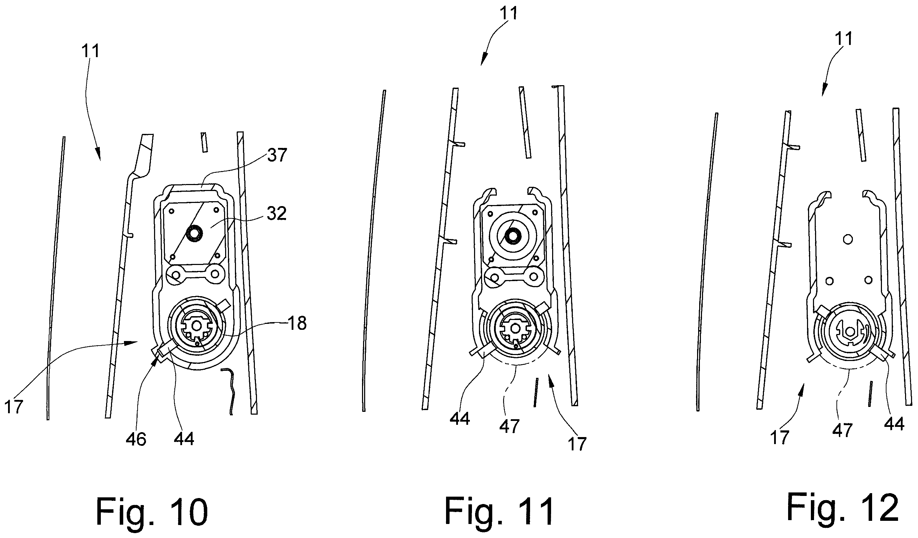

Die Armauflage 13 wird von der Feder 31 in die sekundäre Position gemäß Fig. 9 bewegt, wobei der Vorsprung 44 sich in der Führungsbahn 47 in die in Fig. 12 dargestellte Position an ein Ende der Führungsbahn 47 bewegt. Der Dämpfer 39 bremst dabei die Bewegung der Armauflage 13 in Richtung u1. Zusätzlich könnte etwa 20 Grad vor erreichten der sekundären Position die Armauflage 13 von einer gesonderten Feder gebremst werden, welche in diesem Schwenkbereich bis zum Erreichen der sekundären Position gespannt wird.

Der Motor 32 wird nun derart angetrieben, dass dass Ritzel 40 das Antriebsteil 29 in Richtung y₂ bewegt, wobei der fest mit dem Antriebsteil 29 verbundene Zuganker 23 samt dem Profilelement 43 in Richtung y₂ mitgenommen wird und dabei die Feder 21 spannt (siehe Fig. 9).

Soll die Armauflage 13 nun in die Nichtgebrauchsposition bewegt werden, wird diese entgegen der Rückstellkraft der Feder 31 manuell um die Schwenkachse a in Richtung u₂ geschwenkt, bis die primäre Position gemäß Fig. 8 erreicht ist. Die Feder 31 wird dabei wieder gespannt. Die Armauflage 13 wird, wenn die primäre Position erreicht ist, die der distalen Position entspricht, von der Feder 21 in Richtung y₂ in die proximale Position bewegt, wobei der Vorsprung 44 die Führungsbahn 46 entlangläuft.

Alternativ zu dem hier beschriebenen Ausführungsbeispiel könnte die Armauflage der Armlehne mit einer helixartigen Führungsbahn geführt sein, wobei die Bewegung zwischen der proximalen Position und der distalen Position und die Bewegung zwischen der primären Position und der sekundären Position gleichzeitig erfolgt.

## Patentansprüche

1. Armlehne (10) mit einer Basis (19) und einer mittels einer Führungsvorrichtung (17) zwischen wenigstens einer Gebrauchsposition und einer Nichtgebrauchsposition bewegbaren Armauflage (13), wobei die Armauflage (13) mittels der Führungsvorrichtung (17) parallel zu einer Schwenkachse (a) zwischen einer proximalen und einer distalen Position bewegbar und um die Schwenkachse (a) zwischen einer primären Position und einer sekundären Position schwenkbar ist, wobei die Armlehne (10) eine Antriebsvorrichtung (30) umfassend einen Motorantrieb mit einem Antriebsteil (29) aufweist, welches zwischen einer ersten und einer zweiten Position bewegbar ist, um die Armauflage (13) wenigstens teilweise in eine erste Richtung (y1) zwischen der Nichtgebrauchsposition und der Gebrauchsposition zu verlagern, wobei die Antriebsvorrichtung (30) wenigstens eine Feder (21) umfasst, die bei der Bewegung des Antriebsteils (29) oder eines zusätzlichen Antriebsteils der Antriebsvorrichtung (30) spannbar ist, wobei mit der Feder (21) die Armauflage (13) axial in eine zweite Richtung (y2) bewegbar ist, die der ersten Richtung (y1) entgegen gerichtet ist.

2. Armlehne nach Anspruch 1, **dadurch gekennzeichnet, dass** die Führungsvorrichtung (17) der Basis (19) zugeordnete erste Führungsmittel (20) und der Armauflage (13) zugeordnete zweite Führungsmittel (18) aufweist, die zusammenwirken.

3. Armlehne nach Anspruch 2, **dadurch gekennzeichnet, dass** die ersten Führungsmittel (20) und / oder die zweiten Führungsmittel (18) von einem Rohr gebildet sind.

4. Armlehne nach einem der Ansprüche 2 oder 3, **dadurch gekennzeichnet, dass** die ersten Führungsmittel (20) und die zweiten Führungsmittel (18) von einem Rohr gebildet sind und die Führungsmittel teleskopisch zueinander bewegbar sind.

5. Armlehne nach einem der Ansprüche 2 bis 4, **dadurch gekennzeichnet, dass** bei einer Bewegung des Antriebsteils (29) zwischen der ersten Position und der zweiten Position die zweiten Führungsmittel (18) relativ zu den ersten Führungsmitteln (20) zwischen der proximalen Position und der distalen Position verlagerbar sind.

6. Armlehne nach einem der Ansprüche 2 bis 5, **dadurch gekennzeichnet, dass** die zweiten Führungsmittel (18) eine Anschlagfläche (27) aufweisen, die mit einer Mitnehmerfläche (29) des Antriebsteils derart zusammenwirkt, dass die zweiten Führungsmittel (18) bei einer Bewegung des Antriebsteils (29) in eine erste Richtung (y1) mitgenommen werden und bei einer Bewegung in eine zweite Richtung (y2) voneinander lösbar sind.

7. Armlehne nach einem der Ansprüche 2 bis 6, **dadurch gekennzeichnet, dass** die zweiten Führungsmittel (18) in der distalen Position verriegelbar sind.

8. Armlehne nach einem der vorangehenden Ansprüche, **dadurch gekennzeichnet, dass** ein Zuganker (23) fest mit dem Antriebsteil (29) oder mit einem gesonderten Antriebsteil der Antriebsvorrichtung (30) verbunden ist und dass sich ein erstes Federende (22) der Feder (21) an dem Zuganker abstützt.

9. Armlehne nach einem der Ansprüche 2 bis 8, **dadurch gekennzeichnet, dass** sich ein zweites Federende (24) der Feder (21) an einer Anlagefläche (25) abstützt, die den zweiten Führungsmitteln (18) zugeordnet ist.

10. Armlehne nach einem der Ansprüche 2 bis 9, **dadurch gekennzeichnet, dass** bei einer Bewegung des Antriebsteils (29) von der ersten Position in die zweite Position die zweiten Führungsmittel (18) in die distale Position bewegbar sind.

11. Armlehne nach Anspruch 8, **dadurch gekennzeichnet, dass** bei einer Rückbewegung des Antriebsteils (29) von der zweiten in die erste Position die Feder (21) von dem Zuganker (23) spannbar ist.

12. Armlehne nach einem der vorangehenden Ansprüche, **dadurch gekennzeichnet, dass** eine Dämpfungsvorrichtung (39) zum Dämpfen wenigstens eines Teils der Bewegung der Armauflage (13) von der Nichtgebrauchsposition in die Gebrauchsposition vorgesehen ist.

13. Armlehne nach einem der vorangehenden Ansprüche, **dadurch gekennzeichnet, dass** die Antriebsvorrichtung (30) einen Linearantrieb umfasst.

14. Armlehne nach einem der vorangehenden Ansprüche, **dadurch gekennzeichnet, dass** die Führungsvorrichtung wenigstens eine Führungsbahn zur Führung der zweiten Führungsmittel umfasst und dass die Führungsbahn separat voneinander eine Axialführung und eine Rotationsführung aufweist oder dass die Führungsbahn zugleich die Axialführung und die Rotationsführung bildet.

## Claims

1. Armrest (10) comprising a base (19) and an arm support (13) that can be moved, by means of a guide device (17), between at least one use position and a non-use position, wherein the arm support (13) is movable, by means of the guide device (17), in parallel with a swivel axis (a), between a proximal and a distal position, and is pivotable about the swivel axis (a), between a primary and a secondary position, wherein the armrest (10) comprises a drive device (30) including a motor drive having a drive part (29) which is movable between a first and a second position, in order to displace the arm support (13) in a first direction (y1), between the non-use position and the use position, at least in part, wherein the drive device (30) comprises at least one spring (21) which can be tensioned upon the movement of the drive part (29) or an additional drive part (29) of the drive device (30), wherein the arm support (13) can be moved axially, in a second direction (y2), by means of the spring (21), which second direction is directed counter to the first direction (y1).

2. Armrest according to claim 1, **characterized in that** the guide device (17) comprises first guide means (20) associated with the base (19) and second guide means (18) associated with the arm support (13), which first and second guide means interact.

3. Armrest according to claim 2, **characterized in that** the first guide means (20) and/or the second guide means (18) are formed by a tube.

4. Armrest according to claim 2 or claim 3, **characterized in that** the first guide means (20) and the second guide means (18) are formed by a tube, and the guide means are movable telescopically with respect to one another.

5. Armrest according to any of claims 2 to 4, **characterized in that**, upon a movement of the drive part (29) between the first position and the second position, the second guide means (18) can be displaced, relative to the first guide means (20), between the proximal position and the distal position.

6. Armrest according to any of claims 2 to 5, **characterized in that** the second guide means (18) comprises a stop face (27) which interacts with a driving surface (29) of the drive part such that the second guide means (18) are carried along when the drive part (29) moves in a first direction (y1), and are detachable from one another in the case of a movement in a second direction (y2).

7. Armrest according to any of claims 2 to 6, **characterized in that** the second guide means (18) are lockable in the distal position.

8. Armrest according to any of the preceding claims, **characterized in that** a tension rod (23) is rigidly connected to the drive part (29) or to a separate drive part of the drive device (30), and **in that** a first spring end (22) of the spring (21) is supported on the tension rod.

9. Armrest according to any of claims 2 to 8, **characterized in that** a second spring end (24) of the spring (21) is supported on a contact surface (23) which is associated with the second guide means (18).

10. Armrest according to any of claims 2 to 9, **characterized in that** the second guide means (18) can be moved into the distal position when the drive part (29) moves from the first position into the second position.

11. Armrest according to claim 8, **characterized in that** the spring (21) can be tensioned by the tension rod (23) when the drive part (29) moves from the second position into the first position.

12. Armrest according to any of the preceding claims, **characterized in that** a damping device (39) is provided for damping at least a portion of the movement of the arm support (13) from the non-use position into the use position.

13. Armrest according to any of the preceding claims, **characterized in that** the drive device (30) comprises a linear drive.

14. Armrest according to any of the preceding claims, **characterized in that** the guide device comprises at least one guideway for guiding the second guide means, and **in that** the guideway comprises an axial guide and a rotational guide that are separate from one another, or **in that** the guideway forms the axial guide and the rotational guide simultaneously.

## Revendications

1. Accoudoir (10) avec un socle (19) et un support de bras (13) pouvant être mu au moyen d'un dispositif de guidage (17) entre au moins une position d'utilisation et une position de non-utilisation, dans lequel le support de bras (13) peut être mu au moyen du dispositif de guidage (17) parallèlement à un axe de pivotement (a) entre une position proximale et une position distale et peut pivoter entre une position primaire et une position secondaire, l'accoudoir (10) possédant un dispositif d'entraînement (30) comprenant un entraînement à moteur avec un élément d'entraînement (29) qui peut être mu entre une première et une deuxième position pour déplacer le support de bras (13) au moins partiellement dans une première direction (y1) entre la position de non-utilisation et la position d'utilisation, le dispositif d'entrainement (30) comprenant au moins un ressort (21) qui peut être tendu lors du mouvement de l'élément d'entraînement (29) ou d'un élément d'entraînement supplémentaire du dispositif d'entraînement (30), le support de bras (13) pouvant être mu axialement avec le ressort (21) dans une deuxième direction (y2) qui est opposée à la première direction (y1).

2. Accoudoir selon la revendication 1, **caractérisé en ce que** le dispositif de guidage (17) possède des premiers moyens de guidage (20) associés au socle (19) et des deuxièmes moyens de guidage (18) associés au support de bras (13).

3. Accoudoir selon la revendication 2, **caractérisé en ce que** les premiers moyens de guidage (20) et/ou les deuxièmes moyens de guidage (18) sont formés d'un tube.

4. Accoudoir selon une des revendications 2 ou 3, **caractérisé en ce que** les premiers moyens de guidage (20) et les deuxièmes moyens de guidage (18) sont formés d'un tube et que les moyens de guidage sont mobiles entre eux de façon télescopique.

5. Accoudoir selon une des revendications 2 à 4, **caractérisé en ce que**, lors du mouvement de l'élément d'entraînement (29) entre la première position et la deuxième position, les deuxièmes moyens de guidage (18) peuvent être déplacés par rapport aux premiers moyens de guidage (20) entre la position proximale et la position distale.

6. Accoudoir selon une des revendications 2 à 5, **caractérisé en ce que** les deuxièmes moyens de guidage (18) possèdent une surface de butée (27) qui collabore avec une surface entraîneuse (29) de l'élément d'entraînement de sorte que les deuxièmes moyens de guidage (18) sont entraînés lors d'un mouvement de l'élément d'entraînement (29) dans une première direction (y1) et peuvent se détacher lors d'un mouvement dans une deuxième direction (y2).

7. Accoudoir selon une des revendications 2 à 6, **caractérisé en ce que** les deuxièmes moyens de guidage (18) peuvent être verrouillés dans la position distale.

8. Accoudoir selon une des revendications précédentes, **caractérisé en ce qu'**un tirant (23) est relié solidement avec l'élément d'entraînement (29) ou avec un élément d'entraînement séparé du dispositif d'entraînement (30) et qu'une première extrémité de ressort (22) du ressort (21) s'appuie sur le tirant.

9. Accoudoir selon une des revendications 2 à 8, **caractérisé en ce qu'**une deuxième extrémité de ressort (24) du ressort (21) s'appuie sur une surface d'appui (25) qui est associée aux deuxièmes moyens de guidage (18).

10. Accoudoir selon une des revendications 2 à 9, **caractérisé en ce que**, lors d'un mouvement de l'élément d'entraînement (29) de la première position à la deuxième position, les deuxièmes moyens de guidage (18) peuvent être déplacés dans la position distale.

11. Accoudoir selon la revendication 8, **caractérisé en ce que**, lors d'un recul de l'élément d'entraînement (29) de la deuxième à la première position, le ressort (21) peut être tendu par le tirant (23).

12. Accoudoir selon une des revendications précédentes, **caractérisé en ce qu'**il est prévu un dispositif d'amortissement (39) pour amortir au moins une partie du mouvement du support de bras (13) de la position de non-utilisation à la position d'utilisation.

13. Accoudoir selon une des revendications précédentes, **caractérisé en ce que** le dispositif d'entraînement (30) comprend un entraînement linéaire.

14. Accoudoir selon une des revendications précédentes, **caractérisé en ce que** le dispositif de guidage comprend au moins une voie de guidage pour le guidage des deuxièmes moyens de guidage et que la voie de guidage possède un guide axial et un guide de rotation séparés l'un de l'autre ou que la voie de guidage forme à la fois le guide axial et le guide de rotation.
